# EUROPEAN PATENT APPLICATION

(11) **EP 4 764 627 A1**
(43) Date of publication of application: **24.06.2026**
(21) Application number: 24855683.9
(22) Date of filing: 14.08.2024
(51) Int. Cl.: G02B 5/20, G01J 4/00, G02B 27/28, G02B 5/30, G01J 3/28, B60R 1/00, G01N 21/00, H04N 25/00, G06V 20/00

(54) **FILTER SHEET ARRAY, IMAGING APPARATUS AND VEHICLE**

(30) Priority: 18.08.2023 CN 202311056465
(71) Applicant: Yinwang Intelligent Technologies Co., Ltd., Shenzhen, Guangdong 518129 (CN)
(72) Inventor: LIU, Xuanzeng, Shenzhen, Guangdong 518129 (CN); MA, Sha, Shenzhen, Guangdong 518129 (CN); WANG, Wei, Shenzhen, Guangdong 518129 (CN); LV, Xiaoyu, Shenzhen, Guangdong 518129 (CN); HAN, Ronglei, Shenzhen, Guangdong 518129 (CN)
(74) Representative: Gill Jennings & Every LLP
(86) International application number: PCT/CN2024/112115
(87) International publication number: WO 2025/039957

(57) **Abstract**

This application provides an optical filter array, an imaging apparatus, and a vehicle, and relates to the field of optical device production technologies. The optical filter array includes: K unit optical filters, where the K unit optical filters include an R optical filter, a G optical filter, and a B optical filter, the R optical filter is configured to filter a red color component, the G optical filter is configured to filter a green color component, and the B optical filter is configured to filter a blue color component. The K unit optical filters further include a first unit optical filter, where a polarizer is disposed on the first unit optical filter, and/or a filter component is disposed on the first unit optical filter, and K is an integer greater than or equal to 4. Processing costs and difficulty based on the optical filter array are low. In a processing process, a polarizer and/or a filter component are/is disposed on the first unit optical filter, so that it can be ensured that resolution of an RGB image obtained by the optical filter array before and after processing is the same, and multi-dimensional optical information with high precision can be obtained based on the optical filter array.

## Description

This application claims priority to Chinese Patent Application No. 202311056465.4, filed with the China National Intellectual Property Administration on August 18, 2023 and entitled "OPTICAL FILTER ARRAY, IMAGING APPARATUS, AND VEHICLE", which is incorporated herein by reference in its entirety.

### TECHNICAL FIELD

This application relates to the field of optical technologies, and more specifically, to an optical filter array, an imaging apparatus, and a vehicle.

### BACKGROUND

With development of technologies such as industrial vision and autonomous driving, information obtained by a conventional RGB camera cannot meet a requirement of a system. In some edge scenarios, a sensing system needs to obtain multi-dimensional optical information to compensate for deficiencies. From a perspective of obtaining sensing information, the sensing system may obtain multi-dimensional optical information of a current scenario through a specific optical filter. However, an optical filter processed based on an existing imaging chip coating manner usually has high costs, and single-pixel spatial resolution of an RGB sensor mounted on the optical filter is greatly reduced. As a result, precision of the obtained multi-dimensional optical information is insufficient.

Therefore, how to process an optical filter at a low cost, so that multi-dimensional optical information with high precision can be obtained through the optical filter is a problem that needs to be urgently resolved.

### SUMMARY

This application provides an optical filter array, an imaging apparatus, an optical filter processing method, and a vehicle. Processing costs of the optical filter array are low, and multi-dimensional optical information with high precision can be obtained through the optical filter.

According to a first aspect, an optical filter array is provided. The optical filter array includes K unit optical filters, where the K unit optical filters include an R optical filter, a G optical filter, and a B optical filter, the R optical filter is configured to filter a red color component, the G optical filter is configured to filter a green color component, and the B optical filter is configured to filter a blue color component. The K unit optical filters further include a first unit optical filter, where a polarizer is disposed on the first unit optical filter, and/or a filter component is disposed on the first unit optical filter, and K is an integer greater than or equal to 4.

It should be understood that the optical filter array includes an RGB color array, and optical filters in a conventional form are usually arranged based on the RGB color array. Therefore, the optical filter array can be obtained by processing the optical filters in the conventional form. Therefore, processing difficulty and processing costs for obtaining the optical filter array are low.

For example, an array form of the optical filter array may be referred to as an RGB form for short. Based on the optical filter array, an optical filter array in an RGGB form may also be formed. Certainly, the K unit optical filters may further include a Y optical filter, or the G optical filter is replaced with a Y optical filter. For example, an optical filter array in a RYB form is formed.

For example, when the array form of the optical filter array is an RGB form or a RYB form, K needs to be greater than or equal to 4. When the array form of the optical filter array is an RGGB form or an RYYB form, K needs to be greater than or equal to 5.

For example, the array form of the optical filter array may alternatively be another form, for example, RGGGB or RRGGB. This is not limited in this embodiment of this application.

For example, the optical filter array is applied to the imaging apparatus. In this case, in the imaging apparatus, the polarizer and the filter component may be directly disposed on the first unit optical filter, or may be disposed between the first unit optical filter and a photosensitive element of the imaging apparatus.

Based on the foregoing technical solutions, processing costs based on the optical filter array are low. In a processing process, a polarizer and/or a filter component are/is disposed on the first unit optical filter, so that it can be ensured that resolution of an RGB image obtained by the optical filter array before and after processing is the same, and multi-dimensional optical information with high precision can be obtained based on the optical filter array.

With reference to the first aspect, in some implementations of the first aspect, the polarizer is disposed on the first unit optical filter, the first unit optical filter is configured to filter all color components, and the polarizer is configured to polarize light corresponding to all the color components.

With reference to the first aspect, in some implementations of the first aspect, the polarizer is disposed on the first unit optical filter, the first unit optical filter is configured to filter a single color component, the polarizer is configured to polarize light corresponding to the single color component, and the single color component includes any one of the red color component, the green color component, or the blue color component.

Based on the foregoing technical solutions, a color arrangement form (RGB form) of the optical filter array does not change compared with that before processing. Therefore, resolution of an RGB image obtained based on a target optical filter does not change, ensuring accuracy of RGB image information. In addition, the polarizer corresponding to the first unit optical filter of the optical filter array can obtain an all-color polarization diagram or a single-color polarization diagram, so that the optical filter including the optical filter array can be applied to scenarios such as glare/reflection cancellation, stress detection, and contrast enhancement.

With reference to the first aspect, in some implementations of the first aspect, the filter component is disposed on the first unit optical filter, the first unit optical filter is configured to filter all color components, and the filter component disposed on the first unit optical filter is configured to filter a color component of a first partial band.

For example, the first partial band may be a narrowband band, and correspondingly, a narrowband spectral image may be obtained through the optical filter array on which the filter component is disposed. The first partial band may alternatively be a broadband band, and correspondingly, a broadband spectral image may be obtained through the optical filter array on which the filter component is disposed.

For example, the polarizer may further be disposed on the first unit optical filter.

Based on the foregoing technical solutions, a color arrangement form (RGB form) of the optical filter array does not change compared with that before processing. Therefore, resolution of an RGB image obtained based on a target optical filter does not change, ensuring accuracy of RGB image information. In addition, the corresponding filter component is correspondingly disposed through the first unit optical filter in the optical filter array. Therefore, a spectral image can be further obtained based on the optical filter array. Because the polarizer may be further disposed on the first unit optical filter, a polarization image can be further obtained based on the optical filter array.

With reference to the first aspect, in some implementations of the first aspect, the K unit optical filters further include a second unit optical filter, the second unit optical filter is configured to filter all color components, a filter component is disposed on the second unit optical filter, and the filter component disposed on the second unit optical filter is configured to filter a color component of a second partial band.

For example, the K unit optical filters may further include a third unit optical filter, where the third unit optical filter is also configured to filter all color components, and a filter component is disposed on the third unit optical filter. The filter component disposed on the third unit optical filter may be configured to filter a color component of a third partial band, and certainly, may be configured to filter the color component of the first partial band or the color component of the second partial band.

For example, the K unit optical filters may further include more than three unit optical filters for filtering all color components, filter components are separately disposed on these unit optical filters, and color components of partial bands filtered by these filter components may be the same, may be different from each other, or may be partially the same.

Based on the foregoing technical solutions, a color arrangement form (RGB form) of the optical filter array does not change compared with that before processing. Therefore, resolution of an RGB image obtained based on a target optical filter does not change, ensuring accuracy of RGB image information. In addition, the optical filter array has high scalability, and a plurality of filter components can be disposed in one optical filter array. Therefore, a multispectral image or a hyperspectral image can be further obtained based on the optical filter array.

With reference to the first aspect, in some implementations of the first aspect, when the polarizer is disposed on the first unit optical filter, the optical filter array is used in a first scenario; or when the filter component is disposed on the first unit optical filter, the optical filter array is used in a second scenario; or when the polarizer and the filter component are disposed on the first unit optical filter, the optical filter array is used in a third scenario.

For example, the first scenario may be a scenario in which glare is easily generated. In this scenario, a polarization direction of the polarizer disposed on the first unit optical filter is associated with a polarization angle of light that causes image overexposure.

For example, the second scenario may be a material recognition scenario or a target recognition scenario. In this scenario, a color component of a partial band that can be filtered by the filter component disposed on the first unit optical filter is associated with color information in the scenario. In addition, the color component of the partial band that can be filtered by the filter component disposed on the first unit optical filter may be further associated with requirement information of the scenario, for example, a night imaging requirement and a thermal imaging requirement. Correspondingly, the partial band that can be filtered by the filter component may be a band other than visible light.

For example, the third scenario may be a mixed scenario, for example, may be a scenario in which glare is easily generated and material recognition needs to be performed. For details about the polarization direction of the polarizer and the partial band that can be filtered by the filter component, refer to the corresponding descriptions in the foregoing examples.

Based on the foregoing technical solutions, the optical filter array may have a plurality of polarization forms and/or spectral combination forms, and different polarization forms and/or different spectral combination forms can be applied to different application scenarios. Therefore, the optical filter has a wide application scope.

According to a second aspect, an imaging apparatus is provided. The imaging apparatus includes the optical filter array according to any one of the possible implementations of the first aspect and a photosensitive element.

With reference to the second aspect, in some implementations of the second aspect, there are at least two optical filter arrays, and when polarizers are disposed on the at least two optical filter arrays, polarization directions of the polarizers on the at least two optical filter arrays are the same or different.

For example, the at least two optical filter arrays may be disposed on a same optical filter.

For example, the polarization directions of the polarizers on the at least two optical filter arrays may be all the same, or may be all different, or may be partially the same, or may be partially different.

Based on the foregoing technical solutions, the imaging apparatus can obtain polarization images corresponding to a plurality of polarization directions, and can further obtain an RGB image.

With reference to the second aspect, in some implementations of the second aspect, there are at least two optical filter arrays, and when filter components are disposed on the at least two optical filter arrays, color components of partial bands filtered by the filter components on the at least two optical filter arrays are the same or different.

Based on the foregoing technical solutions, the imaging apparatus can obtain a multispectral image or a hyperspectral image, and can further obtain an RGB image.

With reference to the second aspect, in some implementations of the second aspect, there are at least two optical filter arrays, and when polarizers and filter components are disposed on the at least two optical filter arrays, color components of partial bands filtered by the filter components on the at least two optical filter arrays are the same or different, and color components of partial bands filtered by the filter components on the at least two optical filter arrays are the same or different.

Based on the foregoing technical solutions, an RGB image, a polarization image, and a multispectral image or a hyperspectral image can be obtained. Based on image information, an all-optical function used for digital image processing can be constructed. This helps improve precision and accuracy of a subsequent digital image processing result.

According to a third aspect, a vehicle is provided. The vehicle includes the imaging apparatus according to any one of the possible implementations of the second aspect.

According to a fourth aspect, an optical filter processing method is provided, where the method includes: obtaining a to-be-processed optical filter, where the to-be-processed optical filter includes an optical filter array, the optical filter array includes K unit optical filters, the K unit optical filters include an R optical filter, a G optical filter, and a B optical filter, the R optical filter is configured to filter a red color component, the G optical filter is configured to filter a green color component, the B optical filter is configured to filter a blue color component, and the K unit optical filters further include a first unit optical filter; and processing the optical filter array to obtain a target optical filter. Processing the optical filter array to obtain the target optical filter includes: disposing a polarizer on the first unit optical filter, and/or disposing a filter component on the first unit optical filter, where K is an integer greater than or equal to 4.

For example, one optical filter may include at least one optical filter array. Therefore, processing the optical filter is processing each optical filter array in the optical filter.

Based on the foregoing technical solutions, the optical filter can be processed at a low cost, and corresponding polarization image information and/or spectral image information can be further obtained while it is ensured that resolution of an RGB image obtained through a processed optical filter remains unchanged.

With reference to the fourth aspect, in some implementations of the fourth aspect, the first unit optical filter is configured to filter all color components, and the polarizer disposed on the first unit optical filter is configured to polarize light corresponding to all the color components.

With reference to the fourth aspect, in some implementations of the fourth aspect, the first unit optical filter is configured to filter a single color component, and the polarizer disposed on the first unit optical filter is configured to polarize light corresponding to the single color component, where the single color component includes any one of the red color component, the green color component, or the blue color component.

Based on the foregoing technical solutions, a color arrangement form (RGB form) of the optical filter array does not change compared with that before processing. Therefore, resolution of an RGB image obtained based on a target optical filter does not change, ensuring accuracy of RGB image information. In addition, the polarizer corresponding to the first unit optical filter of the optical filter array can obtain an all-color polarization diagram or a single-color polarization diagram, so that the optical filter including the optical filter array can be applied to scenarios such as glare/reflection cancellation, stress detection, and contrast enhancement.

With reference to the fourth aspect, in some implementations of the fourth aspect, the first unit optical filter is configured to filter all color components, and the filter component disposed on the first unit optical filter is configured to filter a color component of a first partial band.

Based on the foregoing technical solutions, a color arrangement form (RGB form) of the optical filter array does not change compared with that before processing. Therefore, resolution of an RGB image obtained based on a target optical filter does not change, ensuring accuracy of RGB image information. In addition, the corresponding filter component is correspondingly disposed through the first unit optical filter in the optical filter array. Therefore, a spectral image can be further obtained based on the optical filter array.

With reference to the fourth aspect, in some implementations of the fourth aspect, the K unit optical filters further include a second unit optical filter, a filter component is disposed on the second unit optical filter, and the filter component disposed on the second unit optical filter is configured to filter a color component of a second partial band.

Based on the foregoing technical solutions, a color arrangement form (RGB form) of the optical filter array does not change compared with that before processing. Therefore, resolution of an RGB image obtained based on a target optical filter does not change, ensuring accuracy of RGB image information. In addition, the optical filter array has high scalability, and a plurality of filter components can be disposed in one optical filter array. Therefore, a multispectral image or a hyperspectral image can be further obtained based on the optical filter array.

With reference to the fourth aspect, in some implementations of the fourth aspect, the method includes: obtaining first scenario information, where the first scenario information includes light information of a first scenario, and the light information indicates a polarization angle of light that causes image overexpose; and disposing a polarizer whose polarization direction is a first polarization direction on the first unit optical filter based on the light information.

With reference to the fourth aspect, in some implementations of the fourth aspect, the method includes: obtaining second scenario information, where the second scenario information includes requirement information and color element information of a second scenario; and disposing, on the first unit optical filter based on the requirement information and the color element information, a filter component configured to filter a color component of a target band, where the color component of the target band is associated with the requirement information and the color element information.

For example, the second scenario information may further include the light information. Therefore, a polarization direction of the polarizer and a color component of a partial band filtered by the filter component may be determined based on the light information, the requirement information, and the color element information. Then, the determined polarizer and the determined filter component are disposed on a first unit optical filter in each optical filter array. Certainly, when the optical filter array includes a plurality of unit optical filters for filtering all color components, polarization directions of a plurality of polarizers and color components of partial bands filtered by a plurality of filter components may also be determined based on the light information, the requirement information, and the color element information.

Based on the foregoing technical solutions, the optical filter array may have a plurality of polarization forms and/or spectral combination forms, and different polarization forms and/or different spectral combination forms can be applied to different application scenarios. Therefore, the optical filter has a wide application scope.

According to a fifth aspect, an optical filter processing apparatus is provided, where the apparatus includes: an obtaining unit, configured to: obtain a to-be-processed optical filter, where the to-be-processed optical filter includes an optical filter array, the optical filter array includes K unit optical filters, the K unit optical filters include an R optical filter, a G optical filter, and a B optical filter, the R optical filter is configured to filter a red color component, the G optical filter is configured to filter a green color component, the B optical filter is configured to filter a blue color component, and the K unit optical filters further include a first unit optical filter; and an operating unit, configured to: process the optical filter array to obtain a target optical filter, which includes: disposing a polarizer on the first unit optical filter, and/or disposing a filter component on the first unit optical filter, where K is an integer greater than or equal to 4.

With reference to the fifth aspect, in some implementations of the fifth aspect, the first unit optical filter is configured to filter all color components, and the polarizer disposed on the first unit optical filter is configured to polarize light corresponding to all the color components.

With reference to the fifth aspect, in some implementations of the fifth aspect, the first unit optical filter is configured to filter a single color component, and the polarizer disposed on the first unit optical filter is configured to polarize light corresponding to the single color component, where the single color component includes any one of the red color component, the green color component, or the blue color component.

With reference to the fifth aspect, in some implementations of the fifth aspect, the first unit optical filter is configured to filter all color components, and the filter component disposed on the first unit optical filter is configured to filter a color component of a first partial band.

With reference to the fifth aspect, in some implementations of the fifth aspect, the K unit optical filters further include a second unit optical filter, a filter component is disposed on the second unit optical filter, and the filter component disposed on the second unit optical filter is configured to filter a color component of a second partial band.

With reference to the fifth aspect, in some implementations of the fifth aspect, the operating unit is specifically configured to: obtain first scenario information, where the first scenario information includes light information of a first scenario, and the light information indicates a polarization angle of light that causes image overexpose; and dispose a polarizer whose polarization direction is a first polarization direction on the first unit optical filter based on the light information.

With reference to the fifth aspect, in some implementations of the fifth aspect, the operating unit is specifically configured to: obtain second scenario information, where the second scenario information includes requirement information and color element information of a second scenario; and dispose, on the first unit optical filter based on the requirement information and the color element information, a filter component configured to filter a color component of a target band, where the color component of the target band is associated with the requirement information and the color element information.

According to a sixth aspect, an optical filter processing apparatus is provided, where the apparatus includes a processor and a memory. The processor is connected to the memory. The memory is configured to store program code, and the processor is configured to invoke the program code, to perform the method according to any one of the possible implementations of the method design in the fourth aspect.

According to a seventh aspect, a chip system is provided. The chip system is applied to an electronic device. The chip system includes one or more interface circuits and one or more processors. The interface circuit and the processor are interconnected through a line. The interface circuit is configured to echo a signal from a memory of the electronic device, and send a signal to the processor, where the signal includes computer instructions stored in the memory. When the processor executes the computer instructions, the electronic device is enabled to perform the method according to any one of the possible implementations of the method design in the fourth aspect.

According to an eighth aspect, a computer-readable storage medium is provided, and stores a computer program or instructions. The computer program or the instructions are used for implementing the method according to any one of the possible implementations of the method design in the fourth aspect.

According to a ninth aspect, a computer program product is provided. When computer program code or instructions are executed on a computer, the computer is enabled to perform the method according to any one of the possible implementations of the method design in the fourth aspect.

### BRIEF DESCRIPTION OF DRAWINGS

FIG. 1 is a diagram of an optical filter for obtaining polarization image information;
FIG. 2 is a diagram of an optical filter array according to an embodiment of this application;
FIG. 3 is a schematic flowchart of an optical filter processing method according to an embodiment of this application;
FIG. 4 is a diagram of another structure of an optical filter according to an embodiment of this application;
FIG. 5 is a diagram of another structure of an optical filter according to an embodiment of this application;
FIG. 6 is a diagram of another structure of an optical filter according to an embodiment of this application;
FIG. 7 is a diagram of another structure of an optical filter according to an embodiment of this application;
FIG. 8 is a diagram of another structure of an optical filter according to an embodiment of this application;
FIG. 9 is a diagram of another structure of an optical filter according to an embodiment of this application;
FIG. 10 is a diagram of another structure of an optical filter according to an embodiment of this application;
FIG. 11 is a schematic flowchart of another optical filter processing method according to an embodiment of this application;
FIG. 12 is a schematic flowchart of another optical filter processing method according to an embodiment of this application;
FIG. 13 is a schematic flowchart of another optical filter processing method according to an embodiment of this application; and
FIG. 14 is a diagram of an optical filter processing apparatus 1400 according to an embodiment of this application.

### DESCRIPTION OF EMBODIMENTS

The following describes technical solutions of this application with reference to accompanying drawings.

Technical solutions in embodiments of this application may be applied to an imaging system. In an existing imaging system, corresponding optical information in a current scenario is usually obtained through an optical filter. An optical filter that can obtain polarization image information is used as an example. A polarizer may be disposed on each sub-optical filter of the optical filter.

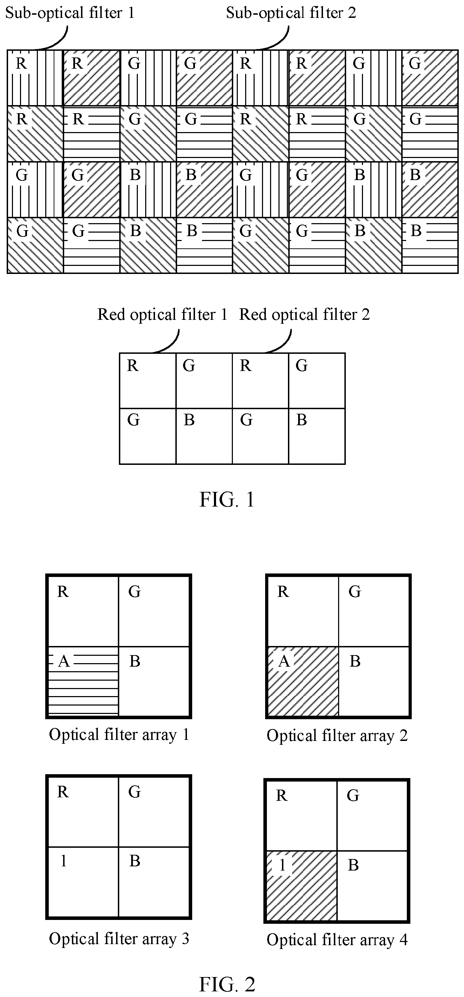

FIG. 1 is a diagram of an optical filter for obtaining polarization image information.

FIG. 1 shows two groups of optical filter arrays based on a Bayer filter, and every four sub-optical filters in the two groups of optical filter arrays correspond to one color. In other words, every four sub-optical filters correspond to one pixel of an RGB sensor, and the four sub-optical filters respectively correspond to polarizers in four polarization directions.

A sub-optical filter 1 is used as an example. It can be learned from a principle of digital image processing that, before digital image processing is performed on a target image obtained through the sub-optical filter 1, all target images that are in a same color and in a same polarization direction as the sub-optical filter 1 need to be obtained. In all sub-optical filters that obtain these target images, a larger quantity of sub-optical filters between adjacent sub-optical filters indicates lower RGB image resolution of a corresponding RGB sensor. A sub-optical filter 2 adjacent to the sub-optical filter 1 is used as an example. There are three sub-optical filters between the sub-optical filter 1 and the sub-optical filter 2.

However, if the polarizer is not disposed on the Bayer filter, and the RGB image is directly obtained through the Bayer filter, the optical filter of each color does not need to be divided. Therefore, the optical filter of each color corresponds to one pixel of the RGB sensor.

A red optical filter 1 is used as an example. It can be learned from a principle of digital image processing that, before digital image processing is performed on a target image obtained through the red optical filter 1 (a geometric parameter is equivalent to the sub-optical filter 1), target images of all red optical filters need to be obtained. In this case, in all the red optical filters that obtain these target images, a larger quantity of optical filters between adjacent red optical filters indicates lower RGB image resolution of a corresponding RGB sensor. A red optical filter 2 adjacent to the red optical filter 1 is used as an example. There is one green optical filter between the red optical filter 1 and the red optical filter 1.

It can be learned that, although the polarization image information can be obtained according to the foregoing method, RGB image resolution of the RGB sensor is greatly reduced. In addition, a pixel color arrangement of the Bayer filter is further changed. In other words, before the change, one sub-optical filter in the Bayer filter corresponds to one pixel color, and after the change, four sub-optical filters in the Bayer filter correspond to one pixel color. Therefore, a quantity of RGB pixels of the RGB sensor is reduced. In addition, optical information like a spectral image cannot be obtained based on the optical filter shown in FIG. 1.

In view of this, embodiments of this application provide an optical filter array, an imaging apparatus, an optical filter processing method, and a vehicle, so that an optical filter can be processed at a low cost, accurate multi-dimensional optical information can be extracted by processing an image obtained through the optical filter. The multi-dimensional optical information includes RGB image information, polarization image information, and spectral image information.

An embodiment of this application provides an optical filter array. FIG. 2 is a diagram of an optical filter array according to an embodiment of this application.

The filter component array includes K unit optical filters, where the K unit optical filters include an R optical filter, a G optical filter, and a B optical filter, the R optical filter is configured to filter a red color component, the G optical filter is configured to filter a green color component, and the B optical filter is configured to filter a blue color component. The K unit optical filters further include a first unit optical filter, where a polarizer is disposed on the first unit optical filter, and/or a filter component is disposed on the first unit optical filter, and K is an integer greater than or equal to 4.

Refer to FIG. 2. All optical filter arrays in this example each include four unit optical filters. In other words, K is equal to 4. In accompanying drawings of this application, a unit optical filter configured to filter all color components is marked as A. Therefore, in FIG. 2, a first unit optical filter is marked as A.

A polarizer is disposed on a first unit optical filter in an optical filter array 1. A polarization direction of the polarizer is not limited in this embodiment of this application. Therefore, the polarization direction of the polarizer disposed on the first unit optical filter may alternatively be another direction, for example, an optical filter array 2. Based on an optical filter including the optical filter array 1 and the optical filter array 2, an RGB image and a polarization image can be obtained.

A filter component is disposed on a first unit optical filter in an optical filter array 3. Because the filter component is configured to filter a color component of a partial band, after the first unit optical filter and the filter component are combined, the optical filter can be configured to filter the color component of the partial band. Correspondingly, in FIG. 2, the first unit optical filter on which the filter component is disposed is marked as 1, and the number "1" indicates that the filter component is configured to filter a color component of a specific partial band. The color component of the partial band corresponding to the filter component is not limited in this embodiment of this application. Therefore, the filter component disposed on the first unit optical filter may be further configured to filter a color component of another partial band. Based on an optical filter including the optical filter array 3, an RGB image and a spectral image can be obtained.

A polarizer and a filter component are disposed on a first unit optical filter in an optical filter array 4. Based on an optical filter including the optical filter array 4, an RGB image, a polarization image, and a spectral image can be obtained.

In addition, before and after the polarizer and/or the filter component are/is disposed on the first unit optical filter, an RGB color arrangement of the optical filter including the optical filter array provided in this embodiment of this application does not change. Therefore, resolution of an RGB image obtained based on the optical filter does not decrease due to disposition of the polarizer and/or the filter component on the first unit optical filter.

Based on the foregoing technical solutions, processing costs based on the optical filter array are low. In a processing process, a polarizer and/or a filter component are/is disposed on the first unit optical filter, so that it can be ensured that resolution of an RGB image obtained by the optical filter array before and after processing is the same, and multi-dimensional optical information with high precision can be obtained based on the optical filter array.

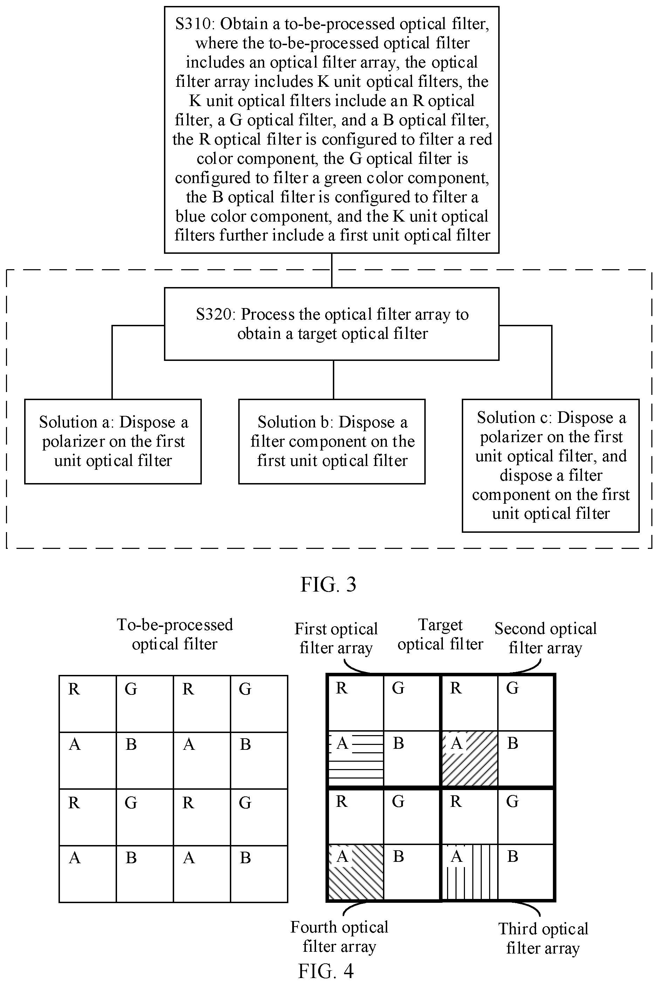

Correspondingly, an embodiment of this application further provides an optical filter processing method. FIG. 3 is a schematic flowchart of an optical filter processing method according to an embodiment of this application.

S310: Obtain a to-be-processed optical filter, where the to-be-processed optical filter includes an optical filter array, the optical filter array includes K unit optical filters, the K unit optical filters include an R optical filter, a G optical filter, and a B optical filter, the R optical filter is configured to filter a red color component, the G optical filter is configured to filter a green color component, the B optical filter is configured to filter a blue color component, and the K unit optical filters further include a first unit optical filter.

In some possible embodiments, the to-be-processed optical filter may be a Bayer filter, or an arrangement manner of color optical filters of the K unit optical filters may correspond to a conventional color arrangement of the Bayer filter. In addition, a specific color arrangement manner of the Bayer filter is not limited in this embodiment of this application.

S320: Process the optical filter array to obtain a target optical filter, including:
solution a: Dispose a polarizer on the first unit optical filter; or
solution b: Dispose a filter component on the first unit optical filter; or
solution c: Dispose a polarizer on the first unit optical filter, and dispose a filter component on the first unit optical filter.

Because an optical filter is an important element of an imaging apparatus, the foregoing processing method may be specifically a processing method for the imaging apparatus, or may be understood as a part of a processing process of the imaging apparatus.

It should be understood that, in the foregoing solution c in this embodiment of this application, a sequence of disposing the polarizer and disposing the filter component on the first unit optical filter is not limited.

In some possible embodiments, a polarization direction of the polarizer may be any direction, and the filter component may be a broadband filter component or a narrowband filter component.

Based on the foregoing technical solutions, the optical filter can be processed at a low cost, and corresponding polarization image information and/or spectral image information can be further obtained while it is ensured that resolution of an RGB image obtained through a processed optical filter remains unchanged.

It should be understood that the foregoing filter component array includes an optical filter array obtained through processing based on the solution a, the solution b, or the solution c. The following correspondingly describes a specific form of the optical filter array obtained through processing based on the three solutions.

In some possible embodiments, the color arrangement manner of the Bayer filter is used as an example. Generally, four unit optical filters form an optical filter array, and the optical filter array includes optical filters of three colors: an R optical filter, a G optical filter, and a B optical filter. The optical filters of the three colors may be combined into a plurality of arrangement forms in the optical filter array, for example, an RGB form and an RGGB form. Certainly, the G optical filter may be replaced with a Y optical filter, where the Y optical filter is configured to filter a yellow color component. Then, the optical filters of the three colors may be combined into a plurality of arrangement forms in the optical filter array, for example, an RYB form and an RYYB form. The optical filters of the foregoing three colors may alternatively be replaced with optical filters of other colors, and details are not described herein again.

In some possible embodiments, when the optical filter array includes the optical filters of the three colors, the optical filter array further includes the first unit optical filter. For example, four unit optical filters form an optical filter array. When the arrangement form of the optical filter array is the RGB form, the first unit optical filter is configured to filter all color components. When the arrangement form of the optical filter array is the RGGB form, the first unit optical filter is configured to filter a single color component, where the single color component is a green color component in this example. Certainly, when the optical filter array includes another color arrangement manner, a color component filtered by the first unit optical filter is similar to the foregoing example. In other words, when there is no repeated color optical filter, the first unit optical filter is configured to filter all color components; or when there is a repeated color optical filter, the first unit optical filter is configured to filter a single color component, where the single color component is a color component corresponding to a repeated color.

In some possible embodiments, an array form of the optical filter array may alternatively be another form, for example, RGGGB or RRGGB. This is not limited in this embodiment of this application.

Based on the foregoing three solutions, an optical filter array and a corresponding optical filter in the following embodiments may be obtained.

In some possible embodiments, a polarizer is disposed on the first unit optical filter in the optical filter array, the first unit optical filter is configured to filter all color components, and the polarizer is configured to polarize light corresponding to all the color components.

FIG. 4 is a diagram of a structure of an optical filter according to an embodiment of this application. A to-be-processed optical filter on a left side of FIG. 4 is an optical filter that is not further processed and on which a polarizer and/or a filter component are/is not disposed, and a target optical filter on a right side of FIG. 4 is the optical filter provided in this embodiment of this application. The optical filter includes a plurality of optical filter arrays, and each optical filter array includes an R optical filter, a G optical filter, a B optical filter, and a first unit optical filter.

As shown in FIG. 4, in accompanying drawings of this application, a unit optical filter configured to filter all color components is marked as A. Therefore, in FIG. 4, a first unit optical filter is marked as A.

In some possible embodiments, one optical filter may include more than two optical filter arrays, and polarization directions of polarizers disposed on first unit optical filters in the optical filter arrays may be different. As shown in FIG. 4, the optical filter includes a first optical filter array, a second optical filter array, a third optical filter array, and a fourth optical filter array. A polarizer whose polarization direction is a first polarization direction is disposed on a first unit optical filter of the first optical filter array, a polarizer whose polarization direction is a second polarization direction is disposed on a first unit optical filter of the second optical filter array, a polarizer whose polarization direction is a third polarization direction is disposed on a first unit optical filter of the third optical filter array, and a polarizer whose polarization direction is a fourth polarization direction is disposed on a first unit optical filter of the fourth optical filter array. Therefore, based on the optical filter, an all-color multi-directional polarization diagram can be obtained.

In some possible embodiments, the foregoing first polarization direction to the fourth polarization direction are sequentially different by 45°. For example, the first polarization direction is 0°, the second polarization direction is 45°, the third polarization direction is 90°, and the fourth polarization direction is 135°. Certainly, the first polarization direction to the fourth polarization direction may alternatively be polarization directions of other reasonable angles.

It should be understood that an RGB color arrangement form of the optical filter array does not change due to disposition of the polarizer on the first unit optical filter. Therefore, before and after the polarizer is disposed, resolution of an RGB image obtained through the optical filter including the optical filter array is not reduced, ensuring accuracy of RGB image information. In addition, based on the polarizer, an all-color polarization diagram with low resolution can be further obtained. Although resolution of the all-color polarization diagram is lower than resolution of the RGB image, the all-color polarization diagram can meet requirements in most scenarios such as glare/reflection cancellation, stress detection, and contrast enhancement. In addition, the resolution of the all-color polarization diagram obtained in this solution is the same as the resolution of the single-color polarization diagram obtained in the foregoing conventional technology solution 2. Therefore, the resolution of the RGB image obtained based on the optical filter including the optical filter array is not reduced after the polarizer is added to the optical filter array. In other words, it can be ensured that the polarization image can be obtained, and processing costs can be effectively controlled without reducing a quantity of RGB pixels of the RGB sensor.

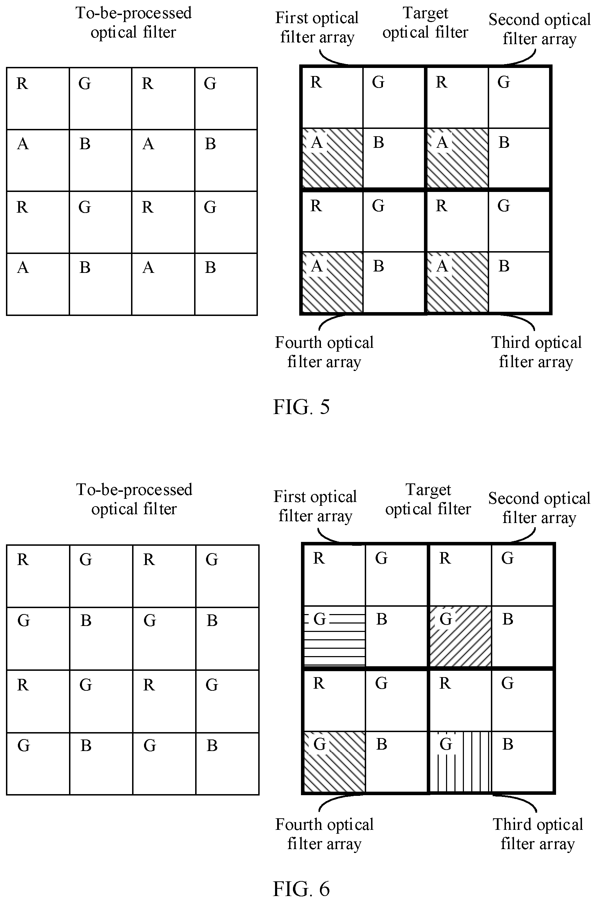

FIG. 5 is a diagram of another structure of an optical filter according to an embodiment of this application. A to-be-processed optical filter on a left side of FIG. 5 is an optical filter that is not further processed and on which a polarizer and/or a filter component are/is not disposed, and a target optical filter on a right side of FIG. 5 is the optical filter provided in this embodiment of this application.

A color form of each optical filter array shown in FIG. 5 is the same as a color form of each optical filter array shown in FIG. 4.

In some possible embodiments, as shown in FIG. 5, more than two optical filter arrays may be included, and polarization directions of polarizers disposed on first unit optical filters in the optical filter arrays may be the same. A polarizer whose polarization direction is a first polarization direction is disposed on a first unit optical filter of a first optical filter array, a polarizer whose polarization direction is the first polarization direction is disposed on a first unit optical filter of a second optical filter array, a polarizer whose polarization direction is the first polarization direction is disposed on a first unit optical filter of a third optical filter array, and a polarizer whose polarization direction is the first polarization direction is disposed on a first unit optical filter of a fourth optical filter array. Therefore, based on the optical filter, an all-color single-directional polarization diagram can be obtained.

It should be understood that the polarization direction of the polarizer disposed on the first unit optical filter of each optical filter array may alternatively be another direction. This is not limited in this application.

It can be learned from the optical filter shown in FIG. 5 that the RGB color arrangement form of the optical filter array does not change due to disposition of the polarizer on the first unit optical filter. Therefore, before and after the polarizer is disposed, resolution of an RGB image obtained through the optical filter including the optical filter array is not reduced, ensuring accuracy of RGB image information. In addition, based on the polarizer, a high-resolution all-color single-directional polarization diagram can be obtained, where resolution of the all-color single-directional polarization diagram is equal to the resolution of the RGB image. In addition, even if a polarization diagram directly obtained through the target optical filter is a single-directional polarization diagram, all-color channel subtraction processing is performed on two all-color single-directional polarization diagrams with a same angle (for example, a polarization angle is 135°), and an all-color single-directional polarization diagram of another polarization direction (that is, a polarization angle is 45°) can be obtained. Although the polarization diagram obtained based on the target optical filter may correspond to two polarization directions, the all-color single-directional polarization diagram based on the two polarization directions can meet requirements in specific scenarios such as glare/reflection cancellation, stress detection, and contrast enhancement. Therefore, the resolution of the RGB image obtained based on the optical filter including the optical filter array is not reduced after the polarizer is added to the optical filter array. In other words, it can be ensured that the polarization image with a same resolution as the RGB image can be obtained, and processing costs can be effectively controlled without reducing a quantity of RGB pixels of the RGB sensor.

In some possible embodiments, the polarizer is disposed on the first unit optical filter, the first unit optical filter is configured to filter a single color component, the polarizer is configured to polarize light corresponding to the single color component, and the single color component includes any one of the red color component, the green color component, or the blue color component.

FIG. 6 is a diagram of another structure of an optical filter according to an embodiment of this application. A to-be-processed optical filter on a left side of FIG. 6 is an optical filter that is not further processed and on which a polarizer and/or a filter component are/is not disposed, and a target optical filter on a right side of FIG. 6 is the optical filter provided in this embodiment of this application. The optical filter includes a plurality of optical filter arrays, and each optical filter array includes one R optical filter, two G optical filters, and one B optical filter, where one of the two G optical filters may be used as the first unit optical filter. Therefore, a single color component filtered by the first unit optical filter is a green color component.

In some possible embodiments, polarization directions of polarizers disposed on the first unit optical filters in the optical filter arrays shown in FIG. 6 may also be different. As shown in FIG. 6, the optical filter includes a first optical filter array, a second optical filter array, a third optical filter array, and a fourth optical filter array. A polarizer whose polarization direction is a first polarization direction is disposed on a first unit optical filter of the first optical filter array, a polarizer whose polarization direction is a second polarization direction is disposed on a first unit optical filter of the second optical filter array, a polarizer whose polarization direction is a third polarization direction is disposed on a first unit optical filter of the third optical filter array, and a polarizer whose polarization direction is a fourth polarization direction is disposed on a first unit optical filter of the fourth optical filter array. Therefore, based on the optical filter, a single-color (green) multi-directional polarization diagram can be obtained.

As shown in FIG. 6, an RGGB color arrangement form of the optical filter array does not change due to disposition of the polarizer on the first unit optical filter. Therefore, before and after the polarizer is disposed, resolution of an RGB image obtained through the optical filter including the optical filter array is not reduced, ensuring accuracy of RGB image information. In addition, a single-color multi-directional polarization diagram with low resolution can be obtained through a polarizer corresponding to one G optical filter (that is, the first unit optical filter) in each optical filter array. Although resolution of the green polarization diagram is lower than resolution of the RGB image, the single-color multi-directional polarization diagram can meet requirements in specific scenarios such as glare/reflection elimination, stress detection, and contrast enhancement. In addition, the resolution of the single-color multi-directional polarization diagram obtained in this solution is the same as the resolution of the single-color polarization diagram obtained in the foregoing conventional technology solution 2. Therefore, the resolution of the RGB image obtained based on the optical filter including the optical filter array is not reduced after the polarizer is added to the optical filter array. In other words, it can be ensured that the polarization image can be obtained, and processing costs can be effectively controlled without reducing a quantity of RGB pixels of the RGB sensor.

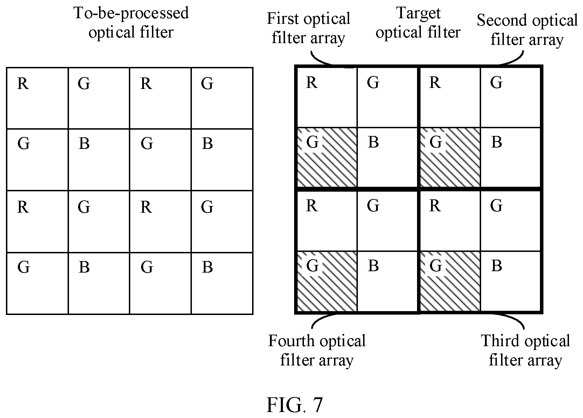

FIG. 7 is a diagram of another structure of an optical filter according to an embodiment of this application. A to-be-processed optical filter on a left side of FIG. 7 is an optical filter that is not further processed and on which a polarizer and/or a filter component are/is not disposed, and a target optical filter on a right side of FIG. 7 is the optical filter provided in this embodiment of this application.

A color form of each optical filter array shown in FIG. 7 is the same as a color form of each optical filter array shown in FIG. 6. One of two G optical filters included in each optical filter array may be used as the first unit optical filter. Therefore, a single color component filtered by the first unit optical filter is also a green color component.

In some possible embodiments, as shown in FIG. 7, polarization directions of polarizers disposed on first unit optical filters in the optical filter arrays may be the same. A polarizer whose polarization direction is a first polarization direction is disposed on a first unit optical filter of a first optical filter array, a polarizer whose polarization direction is the first polarization direction is disposed on a first unit optical filter of a second optical filter array, a polarizer whose polarization direction is the first polarization direction is disposed on a first unit optical filter of a third optical filter array, and a polarizer whose polarization direction is the first polarization direction is disposed on a first unit optical filter of a fourth optical filter array. Therefore, based on the optical filter, a single-color (green) single-directional polarization diagram can be obtained.

As shown in FIG. 7, an RGGB color arrangement form of the optical filter array does not change due to disposition of the polarizer on the first unit optical filter. Therefore, before and after the polarizer is disposed, resolution of an RGB image obtained through the optical filter including the optical filter array is not reduced, ensuring accuracy of RGB image information. In addition, a single-color single-directional polarization diagram with high resolution can be obtained through a polarizer corresponding to one G optical filter (that is, the first unit optical filter) in each optical filter array, where resolution of the single-color single-directional polarization diagram is equal to the resolution of the RGB image. In addition, even if the polarization diagram directly obtained through the target optical filter is a single-directional polarization map, G channel (the G channel corresponding to the polarizer) subtraction processing is performed on the two single-color single-directional polarization diagrams with a same angle (for example, a polarization angle is 135°), and a single-color single-directional polarization diagram in another polarization direction (that is, a polarization angle is 45°) can be obtained. Although the polarization diagram obtained based on the target optical filter may correspond to two polarization directions, the single-color single-directional polarization diagram based on the two polarization directions can meet requirements in specific scenarios such as glare/reflection cancellation, stress detection, and contrast enhancement. Therefore, the resolution of the RGB image obtained based on the optical filter including the optical filter array is not reduced after the polarizer is added to the optical filter array. In other words, it can be ensured that the polarization image with a same resolution as the RGB image can be obtained, and processing costs can be effectively controlled without reducing a quantity of RGB pixels of the RGB sensor.

In some possible embodiments, in any one of the optical filter arrays described in the foregoing embodiments, a filter component is disposed on the first unit optical filter, the first unit optical filter is configured to filter all color components, and the filter component disposed on the first unit optical filter is configured to filter a color component of a first partial band.

It should be understood that, a filter component is disposed on the first unit optical filter array of the optical filter array, so that the optical filter including the optical filter array may be applied to some special application scenarios, for example, a night vision scenario or a temperature measurement scenario.

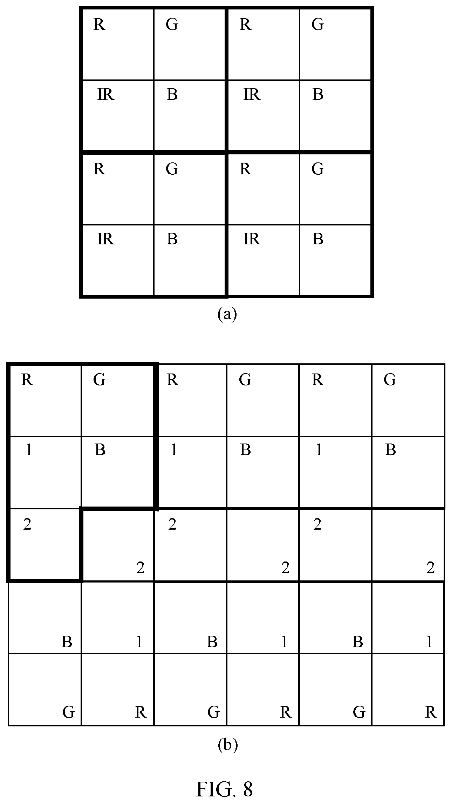

FIG. 8 is a diagram of another structure of an optical filter according to an embodiment of this application.

In some possible embodiments, a filter component is disposed on the first unit optical filter, the first unit optical filter is configured to filter all color components, and the filter component disposed on the first unit optical filter is configured to filter a color component of a first partial band.

In some possible embodiments, it can be learned from (a) in FIG. 8 that the optical filter includes a plurality of optical filter arrays, and each optical filter array includes an R optical filter, a G optical filter, a B optical filter, and a first unit optical filter. In addition, a filter component configured to filter a color component of an infrared band (marked as IR in the figure) is disposed on the first unit optical filter. The infrared band may be the first partial band.

Therefore, based on the optical filter, an RGB image and an infrared spectral image can be obtained.

In some possible embodiments, the K unit optical filters in the optical filter array further include a second unit optical filter, the second unit optical filter is configured to filter all color components, a filter component is disposed on the second unit optical filter, and the filter component disposed on the second unit optical filter is configured to filter a color component of a second partial band.

In some possible embodiments, it can be learned from (b) in FIG. 8 that the optical filter includes a plurality of optical filter arrays, and each optical filter array includes an R optical filter, a G optical filter, a B optical filter, a first unit optical filter, and the second unit optical filter. A filter component configured to filter a color component of a first partial band (marked as 1 in the figure) is disposed on the first unit optical filter, and a filter component configured to filter a color component of the second partial band (marked as 2 in the figure) is disposed on the second unit optical filter.

Based on the optical filter, an RGB image and a plurality of spectral images can be obtained.

In some possible embodiments, the first partial band or the second partial band may be a narrowband band, and correspondingly, a narrowband spectral image may be obtained through the optical filter array on which the filter component is disposed. The first partial band or the second partial band may alternatively be a broadband band, and correspondingly, a broadband spectral image may be obtained through the optical filter array on which the filter component is disposed.

As shown in FIG. 8, an RGB color arrangement form of the optical filter array does not change due to disposition of the polarizer on the first unit optical filter. Therefore, before and after the polarizer is disposed, resolution of an RGB image obtained through the optical filter including the optical filter array is not reduced, ensuring accuracy of RGB image information. The filter component is disposed on the first unit optical filter in each optical filter array. Further, based on the optical filter, the RGB image and the spectral image can be captured. It can be ensured that resolution of the polarization image is the same as that of the RGB image, and processing costs are effectively controlled without reducing a quantity of RGB pixels of the RGB sensor.

In some possible embodiments, the color component filtered by the first unit optical filter is not necessarily a color component corresponding to a repeated color optical filter in the optical filter array, and may alternatively be a color component corresponding to a non-repeated color optical filter, for example, a blue color component in an optical filter array in an RGGB form.

In some possible embodiments, there are at least two optical filter arrays included in the optical filter, and when filter components are disposed on the at least two optical filter arrays, color components of partial bands filtered by the filter components on the at least two optical filter arrays are the same or different.

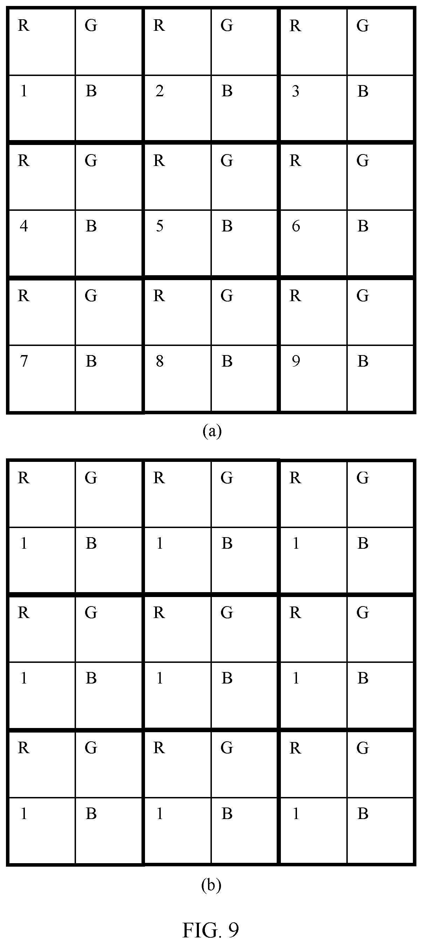

FIG. 9 is a diagram of another structure of a target optical filter according to an embodiment of this application.

It should be understood that FIG. 9 shows an optical filter according to an embodiment of this application. Each optical filter array in the optical filter includes an R optical filter, a G optical filter, a B optical filter, and a first unit optical filter.

As shown in (a) in FIG. 9, the optical filter includes a first optical filter array, a second optical filter array, a third optical filter array, a fourth optical filter array, a fifth optical filter array, a sixth optical filter array, a seventh optical filter array, an eighth optical filter array, and a ninth optical filter array. Filter components configured to filter color components of different partial bands are respectively disposed on first unit optical filters corresponding to the first optical filter array to the ninth optical filter array.

As shown in (b) in FIG. 9, the optical filter includes a first optical filter array, a second optical filter array, a third optical filter array, a fourth optical filter array, a fifth optical filter array, a sixth optical filter array, a seventh optical filter array, an eighth optical filter array, and a ninth optical filter array. Filter components configured to filter a color component of a same partial band are respectively disposed on first unit optical filters corresponding to the first optical filter array to the ninth optical filter array.

Based on the optical filter, a color arrangement form (RGB form) of the optical filter array does not change compared with that before processing. Therefore, resolution of an RGB image obtained based on a target optical filter does not change, ensuring accuracy of RGB image information. In addition, the corresponding filter component is correspondingly disposed through the first unit optical filter in the optical filter array. Therefore, a multispectral image or a hyperspectral image can be further obtained based on the optical filter array.

In some possible embodiments, in any one of the optical filter arrays described in the foregoing embodiments, a polarizer and a filter component are disposed on the first unit optical filter, the first unit optical filter is configured to filter all color components, the polarizer disposed on the first unit optical filter is configured to polarize light corresponding to all the color components, and the filter component disposed on the first unit optical filter is configured to filter a color component of a first partial band.

There are at least two optical filter arrays included in the optical filter, and when filter components are disposed on the at least two optical filter arrays, color components of partial bands filtered by the filter components on the at least two optical filter arrays are the same or different.

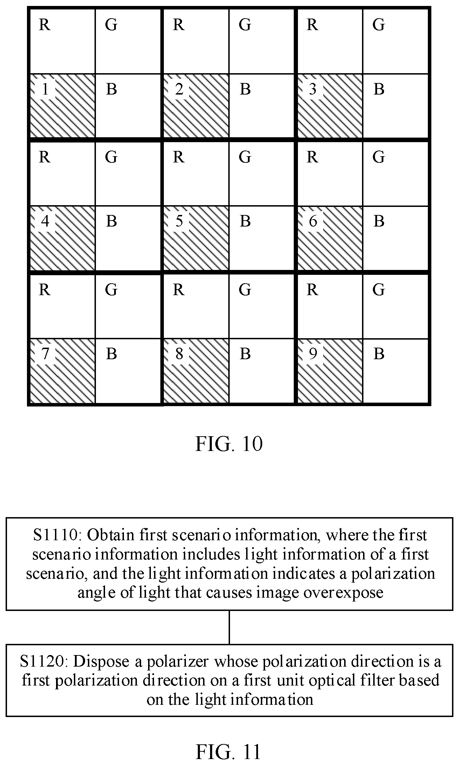

FIG. 10 is a diagram of another structure of an optical filter according to an embodiment of this application.

It should be understood that the target optical filter shown in FIG. 10 is the optical filter according to an embodiment of this application. The optical filter includes a first optical filter array, a second optical filter array, a third optical filter array, a fourth optical filter array, a fifth optical filter array, a sixth optical filter array, a seventh optical filter array, an eighth optical filter array, and a ninth optical filter array. Each optical filter array in the optical filter includes an R optical filter, a G optical filter, a B optical filter, and a first unit optical filter. Filter components configured to filter color components of different partial bands are respectively disposed on first unit optical filters corresponding to the first optical filter array to the ninth optical filter array. In addition, polarizers with a same polarization direction are respectively disposed on the first unit optical filters corresponding to the first optical filter array to the ninth optical filter array.

In some possible embodiments, the filter components respectively disposed on the first unit optical filters corresponding to the first optical filter array to the ninth optical filter array may alternatively be configured to filter a color component of a same partial band. Polarization directions of polarizers respectively disposed on the first unit optical filters corresponding to the first optical filter array to the ninth optical filter array may alternatively be different or partially the same.

Certainly, when each optical filter array further includes the second unit optical filter, a filter component and/or a polarizer may be separately disposed on the second unit optical filter in each optical filter array. When each optical filter array includes a plurality of unit optical filters configured to filter all color components, a filter component and/or a polarizer may be disposed on each of these unit optical filters.

Based on the foregoing technical solutions, an RGB image, a polarization image, and a multispectral image or a hyperspectral image can be obtained. Based on image information, an all-optical function used for digital image processing can be constructed. This helps improve precision and accuracy of a subsequent digital image processing result.

In some possible embodiments, when the polarizer is disposed on the first unit optical filter, the optical filter array is used in a first scenario; or when the filter component is disposed on the first unit optical filter, the optical filter array is used in a second scenario; or when the polarizer and the filter component are disposed on the first unit optical filter, the optical filter array is used in a third scenario.

In some possible embodiments, the first scenario may be a scenario in which glare is easily generated. In this scenario, a polarization direction of the polarizer disposed on the first unit optical filter is associated with a polarization angle of light that causes image overexposure.

In some possible embodiments, the second scenario may be a material recognition scenario or a target recognition scenario. In this scenario, a color component of a partial band that can be filtered by the filter component disposed on the first unit optical filter is associated with color information in the scenario. In addition, the color component of the partial band that can be filtered by the filter component disposed on the first unit optical filter may be further associated with requirement information of the scenario, for example, a night imaging requirement and a thermal imaging requirement. Correspondingly, the partial band that can be filtered by the filter component may be a band other than visible light.

In some possible embodiments, the third scenario may be a mixed scenario, for example, may be a scenario in which glare is easily generated and material recognition needs to be performed. For details about the polarization direction of the polarizer and the partial band that can be filtered by the filter component, refer to the corresponding descriptions in the foregoing examples.

Based on the foregoing technical solutions, the optical filter array may have a plurality of polarization forms and/or spectral combination forms, and different polarization forms and/or different spectral combination forms can be applied to different application scenarios. Therefore, the optical filter has a wide application scope.

Different forms of optical filter arrays or optical filters provided in this embodiment of this application may be applied to different application scenarios. Therefore, in an optical filter processing process, corresponding scenario information also needs to be obtained, to obtain an expected optical filter array or optical filter.

The optical filters shown in FIG. 4 to FIG. 7 and an optical filter in another extended form may be processed by using the following method:
FIG. 11 is a schematic flowchart of another optical filter processing method according to an embodiment of this application.

S1110: Obtain first scenario information, where the first scenario information includes light information of a first scenario, and the light information indicates a polarization angle of light that causes image overexpose.

S1120: Dispose a polarizer whose polarization direction is a first polarization direction on the first unit optical filter based on the light information.

In some possible embodiments, the first polarization direction is associated with the light information, and the polarization angle of the light that causes image overexposure may be inferred based on a location of an application scenario, a light source type, and time. For example, if the location is outdoors, the light source type is the sun. Assuming that the time is 3:00 p.m., the polarization angle of the light that may cause image overexposure may be reversely deduced based on an optical imaging principle, and then the polarization direction of the polarizer may be determined based on the polarization angle.

In some possible embodiments, an association relationship between the first polarization direction and the light information may be represented by using a plurality of data sets. The data sets may be used as a training set for training a neural network model. A trained neural network model may be used in a process of processing an optical filter. To be specific, the light information is input into the neural network model, the neural network model outputs the polarization direction of the polarizer, and then a processing device may dispose the polarizer in the target polarization direction for the to-be-processed optical filter.

In some possible embodiments, an association relationship between the first polarization direction and the light information may alternatively be determined through a pre-experiment based on an optical imaging principle model. Different application scenarios are constructed in a plurality of pre-experiments. Polarization directions that are of the polarizer and that correspond to different light information are resolved based on the optical imaging principle model. Different application scenarios correspond to the foregoing different light information.

The optical filters shown in FIG. 8 and FIG. 9 and an optical filter in another extended form may be processed by using the following method:

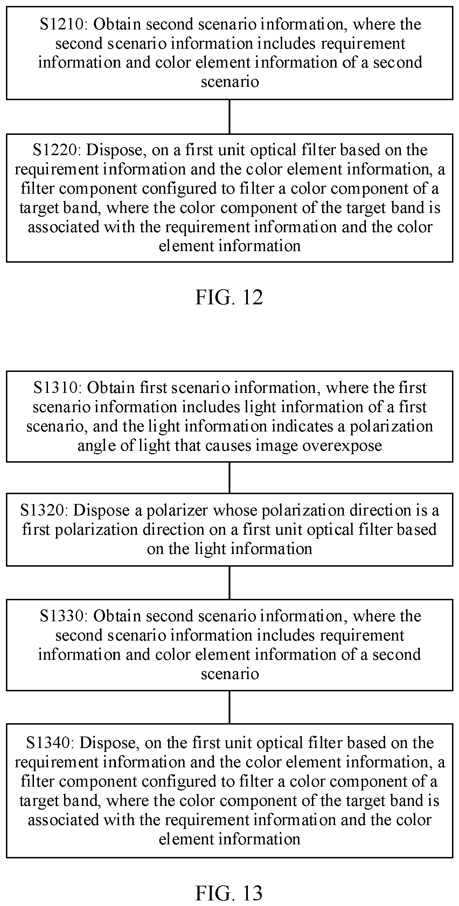

FIG. 12 is a schematic flowchart of another optical filter processing method according to an embodiment of this application.

S1210: Obtain second scenario information, where the second scenario information includes requirement information and color element information of a second scenario.

S1220: Dispose, on a first unit optical filter based on the requirement information and the color element information, a filter component configured to filter a color component of a target band, where the color component of the target band is associated with the requirement information and the color element information.

In some possible embodiments, the requirement information and the color element information of the second scenario are information known before the optical filter is processed, for example, traffic environment detection, agricultural environment detection, and factory device detection. In addition, different application scenarios correspond to different requirements and different color elements. A main color gamut and a band interval of light in the application scenario may be determined with reference to the requirement information and the color element information. For example, in an agricultural environment detection scenario, in addition to spectra corresponding to red, green, and blue with wide spectral bands in the main color gamut, specific narrowband spectra in a green color gamut and a yellow color gamut further need to be obtained, to obtain a multispectral image or a hyperspectral image. However, in a traffic environment detection scenario, in addition to spectra corresponding to red, green, and blue with wide spectral bands in the main color gamut, specific narrowband spectra in various color gamut further needs to be obtained because there are a large quantity of color elements in the traffic environment. In some complex application scenarios, for example, in a traffic environment at night, to enable the image processing device to obtain accurate environment information, the target optical filter needs to obtain specific narrowband spectra in various color gamut, and needs to obtain a broadband spectrum of near-infrared light. It can be learned that the requirement information, the color element information, and the color component of the target band are associated.

Target semantic information corresponding to each spectral curve distribution may be determined based on spectral curve distribution corresponding to the multispectral image or the hyperspectral image, so that material-level object recognition is implemented, and an application scope is wider.

In some possible embodiments, the plurality of filter components in the optical filter shown in FIG. 9 may be narrowband filter components and/or broadband filter components. Therefore, based on the optical filter obtained through the foregoing method, both a broadband spectral image and a narrowband spectral image may be obtained, the broadband spectral image and the narrowband spectral image may be obtained simultaneously, so that an application scope is wide and flexibility is high.

In some possible embodiments, an association relationship between the color component, the requirement information, and the color element information of the target band of the filter component may be represented by using a plurality of data sets. The plurality of data sets may be used as a training set for training a neural network model. A trained neural network model may be used in a process of processing an optical filter. To be specific, the application scenario information and the color element information are input into the neural network model, the neural network model outputs the color component of the target band, and then a filter component corresponding to the color component of the partial band is disposed on the to-be-processed optical filter.

In some possible embodiments, an association relationship between the color component, the requirement information, and the color element information of the target band of the filter component may alternatively be determined through a pre-experiment based on an optical imaging principle model. Different application scenarios are constructed in a plurality of pre-experiments. Color components of target bands corresponding to different requirement information and color element information are resolved based on the optical imaging principle model. Different application scenarios correspond to the foregoing different requirement information and color element information.

Based on the foregoing technical solutions, the RGB color arrangement manner of the to-be-processed optical filter is not changed, and the optical filter can be processed at low costs, so that the RGB image and the multispectral/hyperspectral image can be obtained based on the processed target optical filter. In addition, single-pixel spatial resolution and a quantity of RGB pixels of the RGB sensor are not reduced, so that high-precision multi-dimensional optical information can be obtained through the optical filter.

The optical filter shown in FIG. 10 and an optical filter in another extended form may be processed by using the following method:
FIG. 13 is a schematic flowchart of another optical filter processing method according to an embodiment of this application.

S1310: Obtain first scenario information, where the first scenario information includes light information of a first scenario, and the light information indicates a polarization angle of light that causes image overexpose.

S1320: Dispose a polarizer whose polarization direction is a first polarization direction on a first unit optical filter based on the light information.

S1330: Obtain second scenario information, where the second scenario information includes requirement information and color element information of a second scenario.

S1340: Dispose, on the first unit optical filter based on the requirement information and the color element information, a filter component configured to filter a color component of a target band, where the color component of the target band is associated with the requirement information and the color element information.

A sequence of S1310 and S1320 and S1330 and S1340 is not limited in this embodiment of this application.

In some possible embodiments, an association relationship between the first polarization direction and the light information may be represented by using a plurality of first data sets, and an association relationship between the color component, the requirement information, and the color element information of the target band of the filter component may be represented by using a plurality of second data sets. The first data set and the second data sets may be used as a training set for training a neural network model. A trained neural network model may be used in a process of processing an optical filter. To be specific, the requirement information, the color element information, and the light information are input into the neural network model, the neural network model outputs the color component of the target band and/or the polarization direction of the polarizer, and then a processing device may dispose, on a to-be-processed optical filter, a filter component corresponding to the color component of the target band and/or a polarizer corresponding to the polarization direction.

In some possible embodiments, an association relationship between the first polarization direction and the light information and an association relationship between the color component, the requirement information, and the color element information of the target band of the filter component may alternatively be determined through a pre-experiment based on an optical imaging principle model. Different application scenarios are constructed in a plurality of pre-experiments. Specific forms of the polarizer and the filter component that correspond to the different application scenarios are resolved based on the optical imaging principle model. Different application scenarios correspond to the foregoing different application scenario information and color element information.

Based on the foregoing technical solutions, the RGB color arrangement manner of the to-be-processed optical filter is not changed, and the optical filter can be processed at low costs, so that the RGB image, the polarization image, and the narrowband multispectral/narrowband hyperspectral image can be simultaneously obtained based on the processed target optical filter. In addition, single-pixel spatial resolution and a quantity of RGB pixels of the RGB sensor are not reduced, so that multi-dimensional optical information with high precision can be obtained through the optical filter, to construct an all-optical function used for digital image processing. This helps improve precision and accuracy of a subsequent digital image processing result.

It can be learned from the foregoing embodiment that a specific structure and an application scenario of the optical filter are associated with each other. On the contrary, when the imaging apparatus selects the optical filter for an imaging operation, a corresponding optical filter may be first selected from an optical filter pool based on a current application scenario, where the optical filter pool is pre-processed target optical filters described in the foregoing embodiments. Certainly, based on optical filters of different structures, image processing methods are also different. Finally, the processed image is sent to a downstream application module, and the downstream application module uses the processed image in a function scenario like autonomous driving sensing, industrial vision, security surveillance, or remote sensing.

In addition, an embodiment of this application further provides an apparatus configured to implement any one of the foregoing methods. For example, an optical filter processing apparatus is provided. The apparatus includes units (or means) configured to implement any one of the foregoing methods for processing an optical filter.

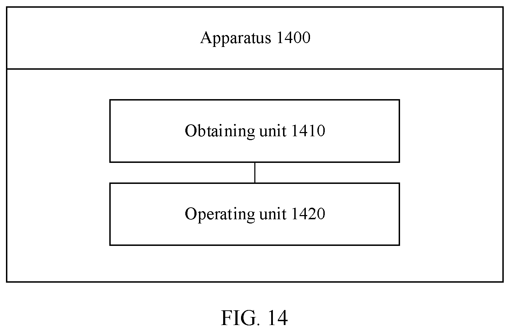

FIG. 14 is a diagram of an optical filter processing apparatus 1400 according to an embodiment of this application.

In some possible embodiments, the apparatus 1400 includes:
an obtaining unit 1410, configured to: obtain a to-be-processed optical filter, where the to-be-processed optical filter includes an optical filter array, the optical filter array includes K unit optical filters, the K unit optical filters include an R optical filter, a G optical filter, and a B optical filter, the R optical filter is configured to filter a red color component, the G optical filter is configured to filter a green color component, the B optical filter is configured to filter a blue color component, and the K unit optical filters further include a first unit optical filter; and
an operating unit 1420, configured to: process the optical filter array to obtain a target optical filter. That the operating unit is configured to process the filter array to obtain the target filter includes: disposing a polarizer on the first unit optical filter, and/or disposing a filter component on the first unit optical filter, where K is an integer greater than or equal to 4.

In some possible embodiments, the operating unit 1420 is specifically configured to: obtain first scenario information, where the first scenario information includes light information of a first scenario, and the light information indicates a polarization angle of light that causes image overexpose; and dispose a polarizer whose polarization direction is a first polarization direction on the first unit optical filter based on the light information.

In some possible embodiments, the operating unit 1420 is specifically configured to: obtain second scenario information, where the second scenario information includes requirement information and color element information of a second scenario; and dispose, on the first unit optical filter based on the requirement information and the color element information, a filter component configured to filter a color component of a target band, where the color component of the target band is associated with the requirement information and the color element information.

In some possible embodiments, the operating unit 1420 is specifically configured to: obtain first scenario information, where the first scenario information includes light information of a first scenario, and the light information indicates a polarization angle of light that causes image overexpose; and dispose a polarizer whose polarization direction is a first polarization direction on the first unit optical filter based on the light information; and/or obtain second scenario information, where the second scenario information includes requirement information and color element information of a second scenario; and dispose, on the first unit optical filter based on the requirement information and the color element information, a filter component configured to filter a color component of a target band, where the color component of the target band is associated with the requirement information and the color element information.

An embodiment of this application further provides an imaging apparatus. The imaging apparatus includes the optical filter array provided in any one of the foregoing embodiments and a photosensitive element.

In some possible embodiments, there are at least two optical filter arrays, and when polarizers are disposed on the at least two optical filter arrays, polarization directions of the polarizers on the at least two optical filter arrays are the same or different.

In some possible embodiments, there are at least two optical filter arrays, and when polarizers are disposed on the at least two optical filter arrays, polarization directions of the polarizers on the at least two optical filter arrays are the same or different.

In some possible embodiments, there are at least two optical filter arrays, and when polarizers and filter components are disposed on the at least two optical filter arrays, color components of partial bands filtered by the filter components on the at least two optical filter arrays are the same or different, and color components of partial bands filtered by the filter components on the at least two optical filter arrays are the same or different.

In some possible embodiments, the at least two optical filter arrays may be disposed on a same optical filter, and the optical filter may be the optical filter in FIG. 4 to FIG. 7, FIG. 9, and FIG. 10, or an optical filter in another extended form.

An embodiment of this application further provides a vehicle. The vehicle may include the imaging apparatus provided in the foregoing embodiments.

A person of ordinary skill in the art may be aware that, in combination with units and algorithm steps of the examples described in embodiments disclosed in this specification, this application can be implemented by electronic hardware or a combination of computer software and electronic hardware. Whether the functions are performed by hardware or software depends on particular applications and design constraints of the technical solution. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form, in a mechanical form, or in another form.

The units described as separate components may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical filter array, comprising:
K unit optical filters, wherein the K unit optical filters comprise an R optical filter, a G optical filter, and a B optical filter, the R optical filter is configured to filter a red color component, the G optical filter is configured to filter a green color component, and the B optical filter is configured to filter a blue color component, wherein
the K unit optical filters further comprise a first unit optical filter, wherein a polarizer is disposed on the first unit optical filter, and/or a filter component is disposed on the first unit optical filter, and K is an integer greater than or equal to 4.

2. The optical filter array according to claim 1, wherein the polarizer is disposed on the first unit optical filter, the first unit optical filter is configured to filter all color components, and the polarizer is configured to polarize light corresponding to all the color components.

3. The optical filter array according to claim 1, wherein the polarizer is disposed on the first unit optical filter, the first unit optical filter is configured to filter a single color component, the polarizer is configured to polarize light corresponding to the single color component, and the single color component comprises any one of the red color component, the green color component, or the blue color component.

4. The optical filter array according to claim 1 or 2, wherein the filter component is disposed on the first unit optical filter, the first unit optical filter is configured to filter all color components, and the filter component disposed on the first unit optical filter is configured to filter a color component of a first partial band.

5. The optical filter array according to claim 4, wherein the K unit optical filters further comprise a second unit optical filter, the second unit optical filter is configured to filter all color components, a filter component is disposed on the second unit optical filter, and the filter component disposed on the second unit optical filter is configured to filter a color component of a second partial band.

6. The optical filter array according to any one of claims 2 to 5, wherein when the polarizer is disposed on the first unit optical filter, the optical filter array is used in a first scenario; or when the filter component is disposed on the first unit optical filter, the optical filter array is used in a second scenario; or when the polarizer and the filter component are disposed on the first unit optical filter, the optical filter array is used in a third scenario.

7. An imaging apparatus, comprising the optical filter array according to any one of claims 1 to 6 and a photosensitive element.

8. The imaging apparatus according to claim 7, wherein there are at least two optical filter arrays, and when polarizers are disposed on the at least two optical filter arrays, polarization directions of the polarizers on the at least two optical filter arrays are the same or different.

9. The imaging apparatus according to claim 7, wherein there are at least two optical filter arrays, and when filter components are disposed on the at least two optical filter arrays, color components of partial bands filtered by the filter components on the at least two optical filter arrays are the same or different.

10. The imaging apparatus according to claim 7, wherein there are at least two optical filter arrays, and when polarizers and filter components are disposed on the at least two optical filter arrays, color components of partial bands filtered by the filter components on the at least two optical filter arrays are the same or different, and color components of partial bands filtered by the filter components on the at least two optical filter arrays are the same or different.

11. A vehicle, comprising the imaging apparatus according to any one of claims 7 to 10.
